# EUROPEAN PATENT APPLICATION

(11) **EP 2 555 144 A2**
(43) Date of publication of application: **06.02.2013**
(21) Application number: 12179080.2
(22) Date of filing: 02.08.2012
(51) Int. Cl.: G06Q 10/10

(54) **Structured document development, management and generation**

(30) Priority: 05.08.2011 AU 2011903154
(71) Applicant: Document Modelling Pty Ltd, Bruce, ACT 2617 (AU)
(72) Inventor: O'Neill, Connell John, Bruce 2617 (AU)
(74) Representative: Musker, David Charles

(57) **Abstract**

A method, processing system, and/or computer readable medium for generating a document. In one aspect, the processing system includes: a memory a processor in communication with the memory. The processor obtains, from the memory, an object tree data structure including a plurality of objects, wherein the object tree data structure is indicative of an order which content generated by objects are to be ordered to generate document content, wherein one or more objects include static content and one or more objects include a dynamic reference. The processor generates dynamic content for each object in the object tree data structure having a dynamic reference. The processor generates the document content by combining the dynamic content and the static content of the plurality of objects according to the order indicated by the object tree data structure in order to generate the document.

## Description

### Technical Field

The present invention relates to a method, processing system, and/or computer readable medium for structured document development, management and generation.

### Background

Currently the development of complex structured documents, such as legal documents, has relied upon traditional technology such as word processing software.

As a structured document is designed in word processing software, portions of the document may be rearranged (i.e. cut and copied). If particular portions reference another portion of the document, or part of the content of a portion is dependent upon the position which it appears in the structured document, the author is generally required to adjust the content of a number of content portions manually which can be tedious task, particularly as the user must systematically check each content portion to ensure that an incorrect reference does not still exist in the structured document.

Whilst structured documents currently generated using word processing software are given an appearance of structure through the use of "styles" which format portions of content with a pre-determined style rule, this functionality does not directly represent the underlying relationships between pieces of content and merely acts as a presentation layer over the top of the content portions of the structured document. Therefore, if content portions in the structured document are rearranged, the references between content portions still require manual updating.

Further problems arise when a first content portion is deleted which is referenced by second content portion. A user is generally required to have an intimate knowledge of the structured document. If a new author edits the structured document by deleting the first content portion which is referenced by the second content portion, the new author may not be even aware of the alterations that may occur elsewhere in the structured document which relate to the second content portion. Unpredictable results may occur in the second content portion of the structured document.

Another problem faced with traditional word processing software is that it can be difficult to conduct a search. Generally, searching of a word processing document is performed on a per-document basis. However, it is difficult to conduct a search at a finer granularity, such as on a per object basis.

In some instances, generic content can be reused in a number of structured documents, such that the generic content is referred to as a precedent in order to avoid the content being retyped. However, if a precedent is modified, this modification does not propagate to structured documents that have been generated using the precedent.

Furthermore, generation of particular documents, such as legal documents which include contracts, generally include a glossary of terms. However, difficulties arise when generating such documents when a user is required to maintain the glossary, such as ensuring that each term in the glossary is referenced in the contract. Again, unless the user has an intimate knowledge of the structured document, the user may not be aware whether the terms in the glossary are being referenced in the structured document which could cause problems interpreting the structured document.

Additionally, when portions of a document are edited, it can be difficult for a user to undo changes to a specific portion of the document. Whilst track changes are currently employed in traditional word processing software, it can be difficult to remove changes made at a specific time or by a specific author whilst retaining other changes that have been made at the same time or same author in the document. Keeping track of when changes occurred to a specific portion of the document can therefore be difficult if not impossible. Generally track changes are recorded within the document on a per document basis which thereby causes difficulties if a user wishes to revert to an older version of a particular portion of the document whilst retaining the changes to the remainder of the document.

Therefore, there is a need for a method, system, and/or computer program product which can overcome or at least alleviate one or more of the above-mentioned problems, or at least provide a useful commercial alternative.

The reference in this specification to any prior publication (or information derived from it), or to any matter which is known, is not, and should not be taken as, an acknowledgement or admission or any form of suggestion that that prior publication (or information derived from it) or known matter forms part of the common general knowledge in the field of endeavour to which this specification relates.

### Summary

In one aspect there is provided a processing system for generating a document, wherein the processing system includes:
a memory; and
a processor in communication with the memory;
wherein:
   the processor obtains, from the memory, an object tree data structure including a plurality of objects, wherein the object tree data structure is indicative of an order which content generated by objects are to be ordered to generate document content, wherein one or more objects include static content and one or more objects include a dynamic reference;
   the processor generates dynamic content for each object in the object tree data structure having a dynamic reference; and
   the processor generates the document content by combining the dynamic content and the static content of the plurality of objects according to the order indicated by the object tree data structure in order to generate the document.

In certain embodiments, the object tree data structure includes a first object having a dynamic reference which includes a pointer to a second object of the object tree data structure, wherein the processor generates dynamic content for the first object based upon the second object referenced by the pointer.

In certain embodiments, the processor generates the dynamic content for the first object based upon the order which the second object is defined in the object tree data structure.

In certain embodiments, the document generated by the processor is an electronic file.

In certain embodiments, the memory includes a database having stored therein serialised data indicative of the object tree data structure, wherein the processor retrieves the serialised data from the database and deserialises the serialised data to reconstruct the object tree data structure for generating the document.

In certain embodiments, the processing system includes:
an input device in communication with the processor; and
an output device in communication with the processor;
wherein the memory includes executable instructions which, when executed by the processor, cause an interface to be presented via the output device presenting a visual representation of the object tree data structure and to enable a user to define or modify the object tree data structure via the input device.

In certain embodiments, the interface includes a first panel including the visual representation of the object tree data structure, and a second panel for presenting content generated for one of the objects selected from the visual representation of the object tree data structure, wherein upon user selection, via the input device, of one of the objects presented within the first panel, the processor determines content for the selected object and controls the output device to present the content for the selected object in the second panel.

In certain embodiments, at least one object has stored in memory version data indicative of one or more previous versions of the respective object, wherein, based on user input via the input device, the processor modifies the object to revert to one of the previous versions of the respective object such that the document is generated using the respective previous version of the respective object.

In certain embodiments, the processor receives input data from the input device indicative of the user deleting one of the objects from the object tree data structure, wherein the processor detects if the deleted object is referenced by a dynamic reference of one of the objects remaining in the object tree data structure, wherein the processor controls the output device to present, via the interface, a detection message in response to the detection and requests correction to the respective dynamic reference.

In certain embodiments, the processor receives new dynamic reference data from the input device, operated by the user, indicative of a dynamic reference to one of the remaining objects in the object tree data structure, wherein the processor modifies the respective dynamic reference of the one or more objects which referenced the deleted object with the new dynamic reference data.

In certain embodiments, the object tree data structure includes glossary data including a plurality of referenceable glossary elements, wherein one or more objects in the object tree data structure reference one or more of the glossary elements, wherein the processor generates the document to include a glossary section based on the glossary data.

In certain embodiments, prior to generating the document, the processor determines if one or more non-referenced glossary elements are present in the glossary data, wherein in response to detection of the one or more non-referenced glossary elements, the processor deletes from the glossary data at least some of the one or more non-referenced glossary elements prior to generating the document.

In certain embodiments, the processor formats the document content according to a style sheet, stored in the memory, to generate the document.

In certain embodiments, the processing system is a distributed processing system including:
a server processing system; and
a client processing system in communication with the server processing system via a network;
wherein the memory storing the object tree data structure is in data communication with the server processing system.

In another aspect there is provided a method of generating a document, the method being performed by a processing system having a memory and processor in communication therewith, wherein the method includes:
the processor obtaining, from the memory, an object tree data structure including a plurality of objects, wherein the object tree data structure is indicative of an order which content generated by objects are to be ordered to generate document content, wherein one or more objects include static content and one or more objects include a dynamic reference;
the processor generating dynamic content for each object in the object tree data structure having a dynamic reference; and
the processor generating the document content by combining the dynamic content and the static content of the plurality of objects according to the order indicated by the object tree data structure in order to generate the document.

In another aspect there is provided a non-transitory computer readable medium for configuring a processing system, including a processor and a memory, to generate a document, wherein the computer readable medium includes executable instructions which when executed causes:
the processor to obtain, from the memory, an object tree data structure including a plurality of objects, wherein the object tree data structure is indicative of an order which content generated by objects are to be ordered to generate document content, wherein one or more objects include static content and one or more objects include a dynamic reference;
the processor to generate dynamic content for each object in the object tree data structure having a dynamic reference; and
the processor to generate the document content by combining the dynamic content and the static content of the plurality of objects according to the order indicated by the object tree data structure in order to generate the document.

In another aspect there is provided a computer program for configuring a processing system, including a processor and a memory, to generate a document, wherein the computer program includes executable instructions which when executed causes:
the processor to obtain, from the memory, an object tree data structure including a plurality of objects, wherein the object tree data structure is indicative of an order which content generated by objects are to be ordered to generate document content, wherein one or more objects include static content and one or more objects include a dynamic reference;
the processor to generate dynamic content for each object in the object tree data structure having a dynamic reference; and
the processor to generate the document content by combining the dynamic content and the static content of the plurality of objects according to the order indicated by the object tree data structure in order to generate the document.

Other embodiments will be described throughout the description of the example embodiments.

### Brief Description of the Figures

Example embodiments should become apparent from the following description, which is given by way of example only, of at least one preferred but non-limiting embodiment, described in connection with the accompanying figures.
Figure 1A illustrates a functional block diagram of an example processing system that can be utilised to embody or give effect to a particular embodiment;
Figure 1B illustrates an example network infrastructure that can be utilised to embody or give effect to a particular embodiment;
Figure 2 illustrates a flowchart representing an example method for generating a document;
Figure 3A is a block diagram representing an example of an object tree data structure;
Figure 3B is a block diagram representing an ordinal layout of content generated by the object tree data structure of Figure 3A;
Figure 3C is a block diagram representing an example object from the object tree data structure of Figure 3A;
Figure 4 illustrates an UML class diagram representing objects forming the object tree data structure for developing an object tree data structure;
Figures 5 to 9 are screenshots of an example application for managing and generating a document using an object tree data structure;
Figure 10 is an example of a subset of an object tree data structure;
Figure 11A is a functional block diagram of a first distributed processing system that can be utilised to embody or give effect to a particular embodiment; and
Figure 11B is a functional block diagram of a second distributed processing system that can be utilised to embody or give effect to a particular embodiment.

### Description of Embodiments

The following modes, given by way of example only, are described in order to provide a more precise understanding of the subject matter of a preferred embodiment or embodiments. In the figures, incorporated to illustrate features of an example embodiment, like reference numerals are used to identify like parts throughout the figures.

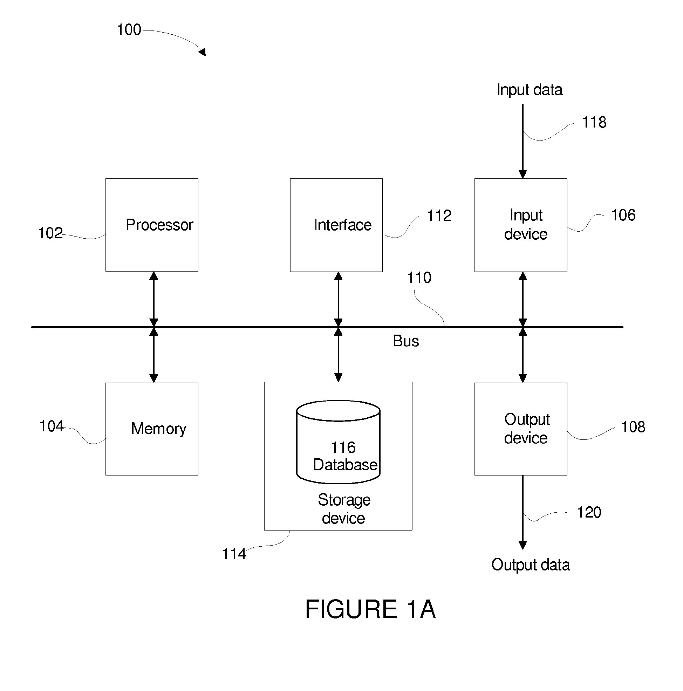

A particular embodiment can be realised using a processing system, an example of which is shown in Fig. 1A. In particular, the processing system 100 generally includes at least one processor 102, or processing unit or plurality of processors, memory 104, at least one input device 106 and at least one output device 108, coupled together via a bus or group of buses 110. In certain embodiments, input device 106 and output device 108 could be the same device. An interface 112 also can be provided for coupling the processing system 100 to one or more peripheral devices, for example interface 112 could be a PCI card or PC card. At least one storage device 114 which houses at least one database 116 can also be provided. The memory 104 can be any form of memory device, for example, volatile or non-volatile memory, solid state storage devices, magnetic devices, etc. The processor 102 could include more than one distinct processing device, for example to handle different functions within the processing system 100.

Input device 106 receives input data 118 and can include, for example, a keyboard, a pointer device such as a pen-like device or a mouse, audio receiving device for voice controlled activation such as a microphone, data receiver or antenna such as a modem or wireless data adaptor, data acquisition card, etc.. Input data 118 could come from different sources, for example keyboard instructions in conjunction with data received via a network. Output device 108 produces or generates output data 120 and can include, for example, a display device or monitor in which case output data 120 is visual, a printer in which case output data 120 is printed, a port for example a USB port, a peripheral component adaptor, a data transmitter or antenna such as a modem or wireless network adaptor, etc.. Output data 120 could be distinct and derived from different output devices, for example a visual display on a monitor in conjunction with data transmitted to a network. A user could view data output, or an interpretation of the data output, on, for example, a monitor or using a printer. The storage device 114 can be any form of data or information storage means, for example, volatile or non-volatile memory, solid state storage devices, magnetic devices, etc..

In use, the processing system 100 is adapted to allow data or information to be stored in and/or retrieved from, via wired or wireless communication means, the at least one database 116 and/or the memory 104. The interface 112 may allow wired and/or wireless communication between the processing unit 102 and peripheral components that may serve a specialised purpose. The processor 102 receives instructions as input data 118 via input device 106 and can display processed results or other output to a user by utilising output device 108. More than one input device 106 and/or output device 108 can be provided. It should be appreciated that the processing system 100 may be any form of terminal, server, specialised hardware, or the like.

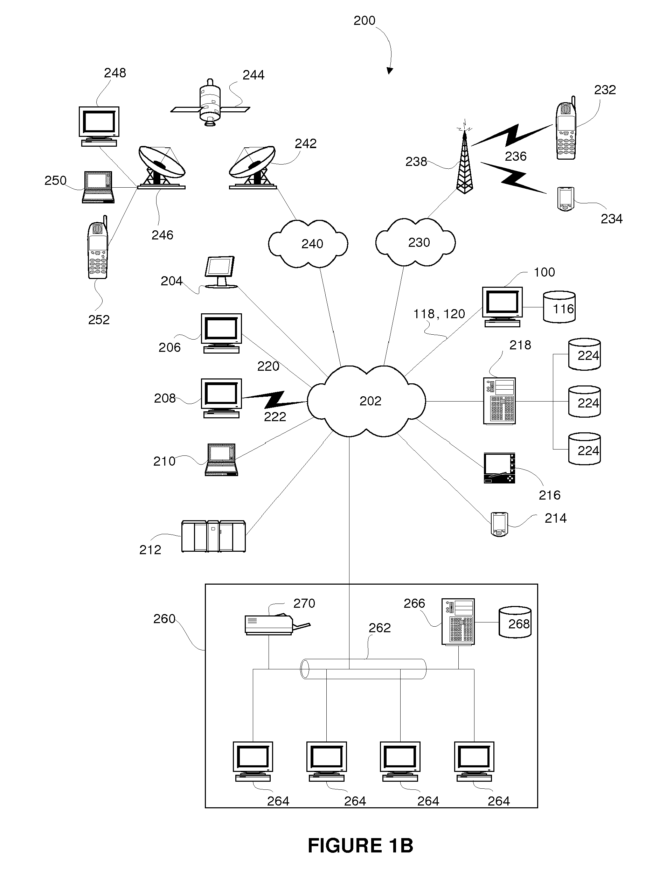

The processing device 100 may be a part of a networked communications system 200, as shown in Fig. 1B. Processing device 100 could connect to network 202, for example the Internet or a WAN. Input data 118 and output data 120 could be communicated to other devices via network 202. Other terminals, for example, thin client 204, further processing systems 206 and 208, notebook computer 210, mainframe computer 212, PDA 214, pen-based computer 216, server 218, etc., can be connected to network 202. A large variety of other types of terminals or configurations could be utilised. The transfer of information and/or data over network 202 can be achieved using wired communications means 220 or wireless communications means 222. Server 218 can facilitate the transfer of data between network 202 and one or more databases 224. Server 218 and one or more databases 224 provide an example of an information source.

Other networks may communicate with network 202. For example, telecommunications network 230 could facilitate the transfer of data between network 202 and mobile or cellular telephone 232 or a PDA-type device 234, by utilising wireless communication means 236 and receiving/transmitting station 238. Satellite communications network 240 could communicate with satellite signal receiver 242 which receives data signals from satellite 244 which in turn is in remote communication with satellite signal transmitter 246. Terminals, for example further processing system 248, notebook computer 250 or satellite telephone 252, can thereby communicate with network 202. A local network 260, which for example may be a private network, LAN, etc., may also be connected to network 202. For example, network 202 could be connected with ethernet 262 which connects terminals 264, server 266 which controls the transfer of data to and/or from database 268, and printer 270. Various other types of networks could be utilised.

The processing device 100 is adapted to communicate with other terminals, for example further processing systems 206, 208, by sending and receiving data, 118, 120, to and from the network 202, thereby facilitating possible communication with other components of the networked communications system 200.

Thus, for example, the networks 202, 230, 240 may form part of, or be connected to, the Internet, in which case, the terminals 206, 212, 218, for example, may be web servers, Internet terminals or the like. The networks 202, 230, 240, 260 may be or form part of other communication networks, such as LAN, WAN, ethernet, token ring, FDDI ring, star, etc., networks, or mobile telephone networks, such as GSM, CDMA or 3G, etc., networks, and may be wholly or partially wired, including for example optical fibre, or wireless networks, depending on a particular implementation.

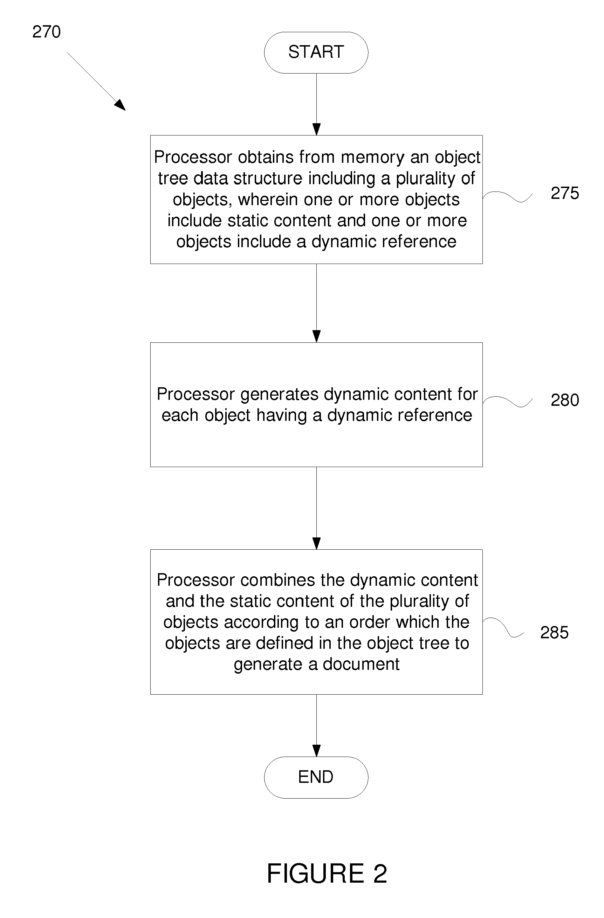

Referring to Figure 2, there is shown a flowchart representing an example method 270 of generating a document. The method 270 is performed by a processing system in the form of processing system 100.

In particular, at step 275, the method 270 includes the processor 102 of the processing system obtaining, from the memory 104 of the processing system, an object tree data structure including a plurality of objects, wherein one or more objects include static content and one or more objects include a dynamic reference. The object tree data structure is indicative of an order which content generated by objects are to be ordered to generate document content. Steps 280 and 285 of method 270 are performed to generate a document including document content. In particular, at step 280, the method 270 includes the processor 102 generating dynamic content for each object having a dynamic reference. At step 280, the method 270 includes the processor 102 generating the document content by combining the dynamic content and the static content of the plurality of objects according to the order indicated by the object tree data structure 300 in order to generate the document 340.

In particular, step 275 can include either the object tree data structure being defined by a user via use of an application executed upon the processing system wherein the defined object tree data structure is stored in volatile or non-volatile memory, or retrieving predefined data indicative of the object tree data structure from a data store. Each of these options will be discussed below in more detail.

It will be appreciated from method 200 that a processing system, in the form of processing system 100, can be provided that is configured to perform the method 200. In particular, the processing system includes a memory 104 and a processor 102 in communication therewith, wherein: the processor 102 obtains, from the memory 104, an object tree data structure including a plurality of objects, wherein the object tree data structure is indicative of an order which content generated by objects are to be ordered to generate document content, wherein one or more objects include static content and one or more objects include a dynamic reference; the processor 102 generates dynamic content for each object in the object tree data structure having a dynamic reference; and the processor 102 generates the document content by combining the dynamic content and the static content of the plurality of objects according to the order indicated by the object tree data structure in order to generate the document.

It will also be appreciated that a computer program product can be provided to configure a processing system, such as processing system 100, to generate a document. In particular, the computer program product can be provided in the form of a computer readable medium, such as a non-transitory computer readable medium, which includes computer executable instructions which when executed by the processor 102 of the processing system causes: the processor 102 to obtain, from the memory 104, an object tree data structure including a plurality of objects, wherein the object tree data structure is indicative of an order which content generated by objects are to be ordered to generate document content, wherein one or more objects include static content and one or more objects include a dynamic reference; the processor 102 to generate dynamic content for each object in the object tree data structure having a dynamic reference; and the processor 102 to generate the document content by combining the dynamic content and the static content of the plurality of objects according to the order indicated by the object tree data structure in order to generate the document.

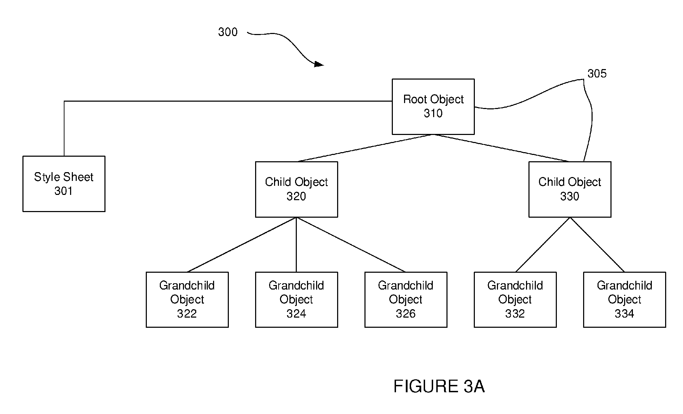

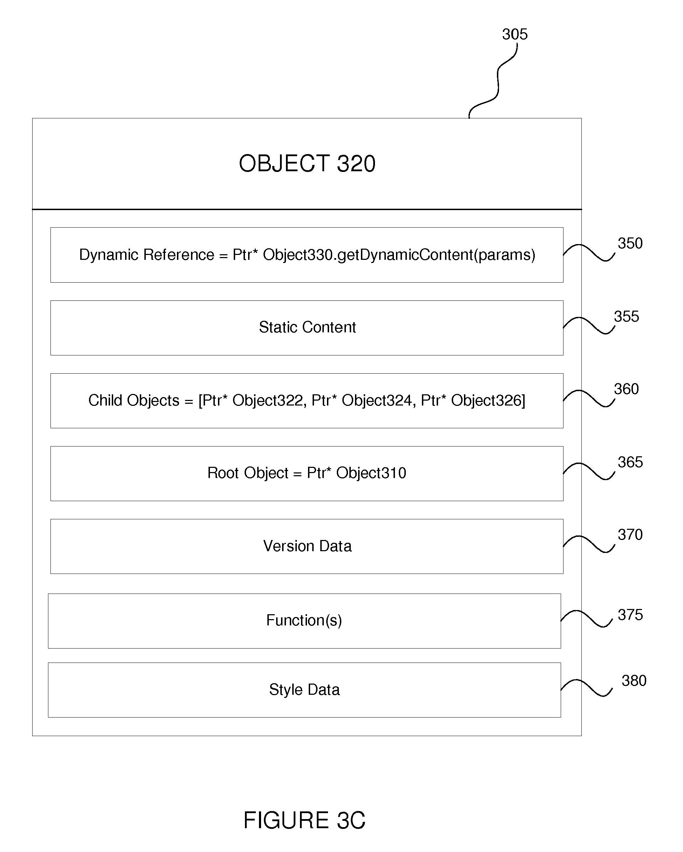

Referring more specifically to Figure 3A there is shown a block diagram representing the object tree data structure 300. Figure 3C shows a block diagram of an example object 320 of object tree data structure 300. In particular, the object tree data structure 200 includes a plurality of objects 304 including a root object 310. The root object 310 is the first object of the object tree data structure 300. The object tree data structure 300 also includes a number of child objects 320-334. Each child object, other than the root object 310, includes an attribute indicative of a parent pointer which references the parent object for the respective object, as shown in Figure 3C. However, it will be appreciated that it is possible that the root object 510 can include a pointer to itself. In some object tree data structures 300, a child object may also be a parent object, wherein a grandchild object references a child object of the object tree data structure 300. Each parent object can also include one or more child pointers 360 (see Figure 3C), wherein each child pointer references a child object in the object tree data structure. In the event that a parent object includes more than one child object, the parent object may have an attribute in the form of an array of pointers referencing the plurality of child objects. The objects of the object tree data structure 300 have an ordinal structure, wherein the root object 310 is the first object of in the ordinal structure of the object tree data structure. As will be discussed in more detail below, the document generated using the object tree data structure 300 is generated according to the ordinal structure of the object tree data structure, wherein the content generated for each object is concatenated according to the position of each object 305 in the object tree data structure 300.

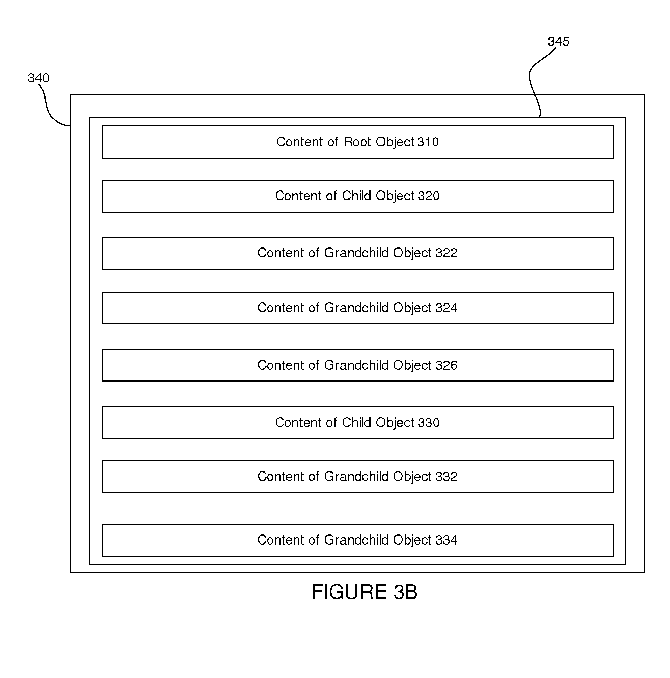

Referring more specifically to Figure 3C, each object 305 in the object tree data structure 300 generally can include an attribute in the form of a string representing static content 355. Additionally, at least some of the objects of the object tree data structure can include an attribute of one or more dynamic references 350 to one or more objects of the object tree data structure 300. When the structured document 340 is generated, the dynamic reference 350 is interpreted by the processor 102 of the processing system by reference to another object 305 in the object tree data structure 300, wherein dynamic content is generated by the processor 102 of the processing system and concatenated with the static content 355 of the respective object 305 to form object content which can be concatenated with object content of other objects of the object tree data structure 300, thereby generating the document content 345 of the document 340 as shown in Figure 3B.

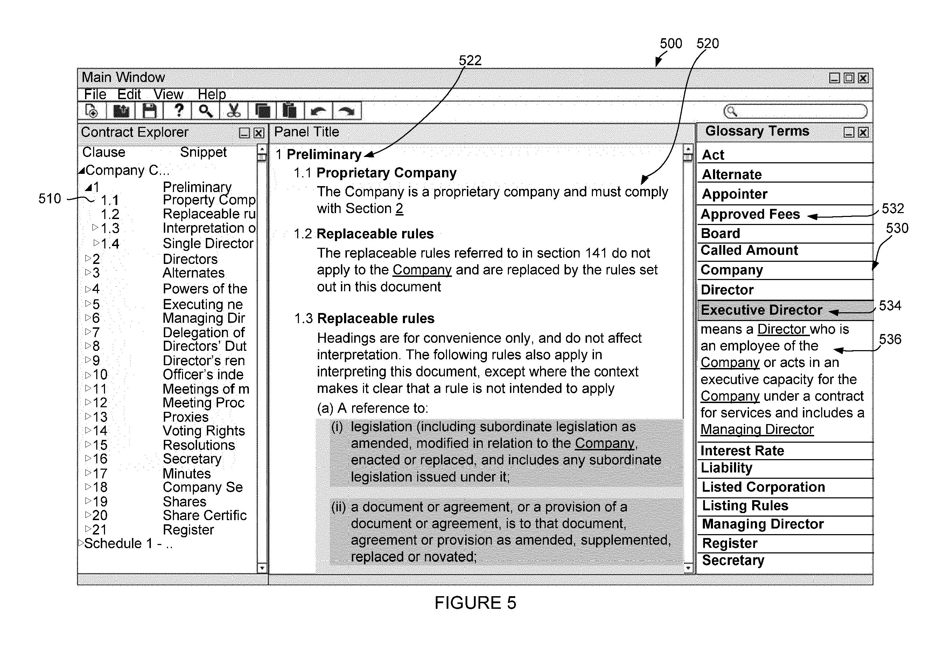

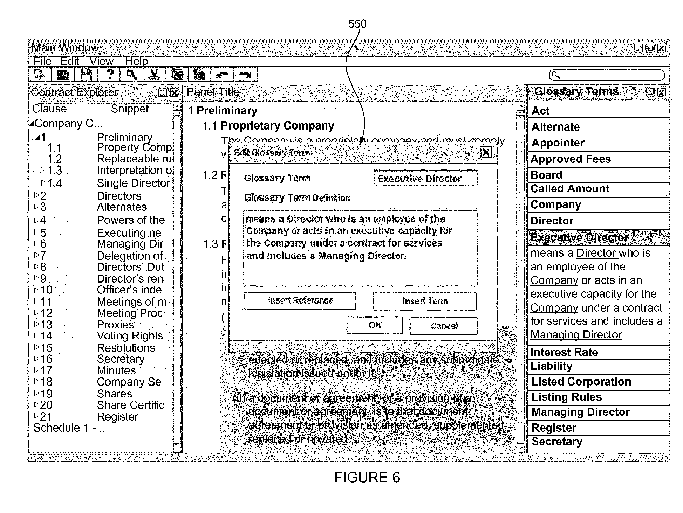

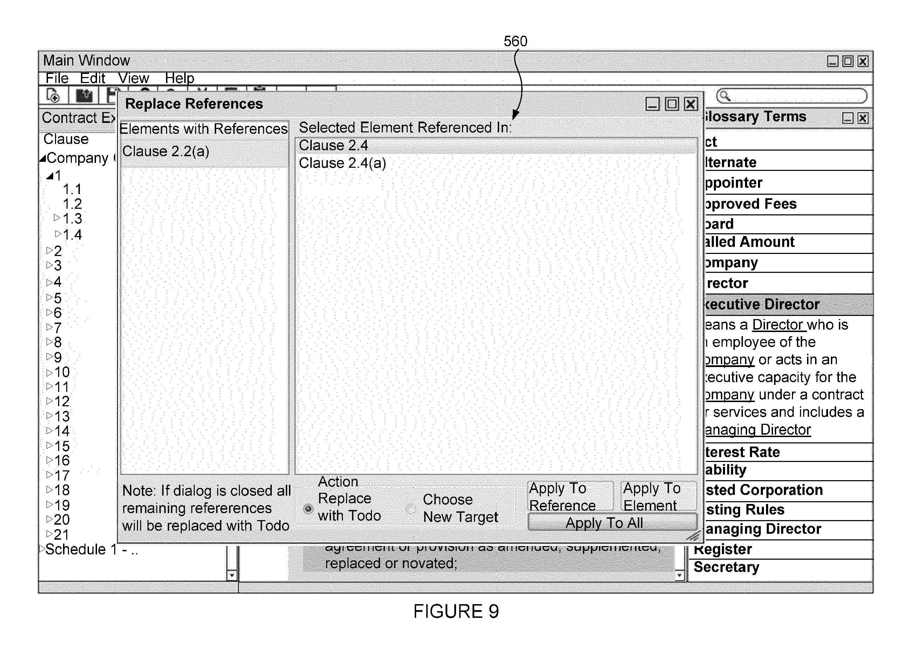

Referring more specifically to Figures 5 to 12 there is shown example screenshots of a interface, presented by an output device 108 of the processing system, associated with a software application 500, executed by the processor 102 of the processing system 100, for use in developing, managing and generating structured documents according to the above mentioned embodiments.

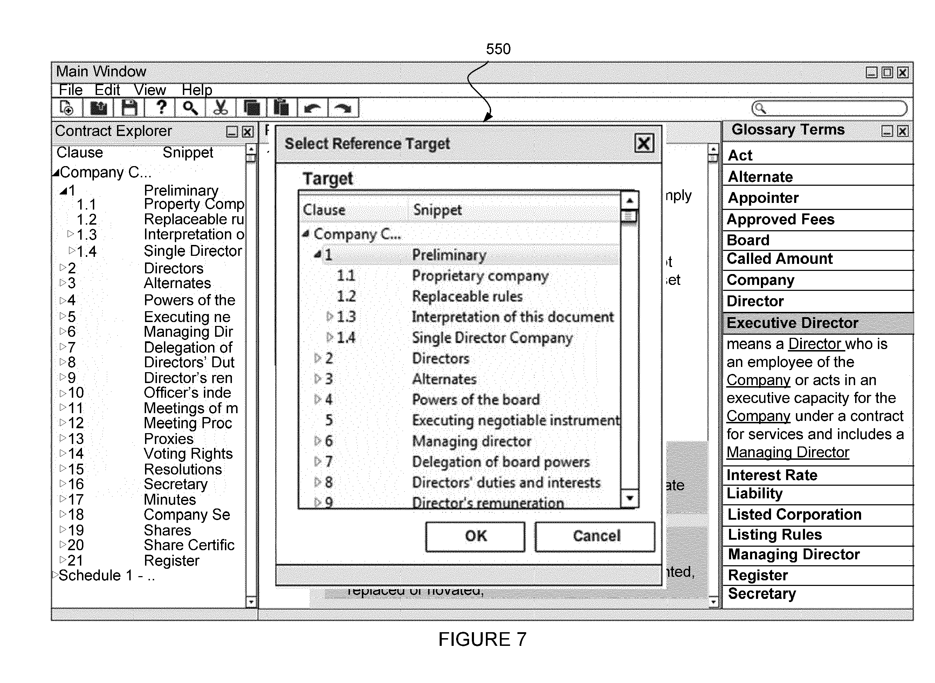

In particular, the application 500 includes first panel in the form of an object tree frame 510. The application 500, executed by the processor 102, presents a graphical representation of the object tree data structure 300, either retrieved from a data store 114 of the processing system 100 or defined within the application 500, within the object tree frame 510. The object tree frame 510 may also present a short textual description 512, as shown in Figure 7, indicative of content stored as an attribute for each respective object of the object tree data structure 300.

The application 500 also includes a second panel in the form of a content viewing frame 520. The application 500, executed by the processor 102, is configured to present content of at least some of the objects 305 in the object tree data structure 300 within the content viewing frame 520.

The application 500 allows the user to select, via the input device 106 of the processing system, such as a keyboard or mouse, an object 300 in the graphical representation of the object tree data structure 300 (i.e. provide focus to one of the objects in the object tree), wherein object content (i.e. static and content) of the selected object 305 is determined by the processor 102 and presented within the content viewing frame 520.

Furthermore, the user is able to edit the content for one or more of the objects 305 of the object tree data structure 300. Specifically, the content presented within the content viewing frame 520 for the focused object 305 can be edited, using the input device 106, within the content viewing frame 520. The processor 102 configures the content viewing frame 520 to delimit the content associated with the object which is selected in the object tree frame 510, wherein a cursor appears in the delimited portion of the content viewing frame 520 to enable editing by the user via the application. Specifically, the content associated with the selected object is displayed in an editable window 522 of the content viewing frame 520, whereas the remaining portion of the content viewing frame 520 merely presents the content of a portion of neighbouring objects 305 of the object tree data structure 300. The edited content is then stored, within memory 104 by the processor 102 as an attribute of the object.

The application 500 is configured to enable a user to define a new object tree data structure 300, as graphically depicted in Figure 3A. In particular, the user uses the input device 106 of the processing system 100 to interact with the user interface to create a new object tree data structure 300. The processor 102 under configuration by the application presents, via the output device 108, a dialog window requesting static content to be defined for the root object 310. The user can define the static content using an input device 106 of the processing system 100. The application 500 then instantiates the root object 310 using the content defined by the user and presents a graphical representation, via the output device 108, of the root node in the object tree frame 510. Focus is then provided to the root node and presents the content associated with the root node in the content viewing frame 520.

The newly defined object tree data structure can then be stored in memory 104 which can include volatile or non-volatile memory.

The user is then able to interact with the user interface, via the input device 106, to define one or more children objects 320, 330 which directly extend from the root object 310. Similar to defining the root object, the application 500 requests content be provided by the user, via the input device 106 of the processing system 100, wherein upon providing the content the processor 102 under configuration from the software application instantiates the child object 320, 330 which includes an attribute indicative of the content and a parent pointer referencing the root object. One or more further children objects 322, 324, 326, 332, 334 can then be defined, using the input device 106, as described above.

The user is able to interact with the user interface of the application, using the input device 106, to define a dynamic reference for one of the objects 305 of the object tree data structure 300. In particular, the user is able to select an object from the object tree data structure 300 which the dynamic reference specifies. The dynamic reference is generally provided in the form of a pointer which points to an object 305 in the object tree data structure 300. When the content of the object is presented in the content viewing frame 520 or when the structured document 340 is generated using the object tree data structure 300, the dynamic reference is interpreted by the processor 102 under configuration by the software application 500 by retrieving the object 305 from memory 104 via the pointer, wherein the referenced object can be used to generate dynamic content.

In one example embodiment, a function of the referenced object 305 can be executed by the processor 102 under configuration by the application to return the dynamic content. The dynamic content can then be concatenated by the processor 102 with the static content to generate the content of the object 305 for either presentation within the content viewing frame 520 or generation of the structured document 340. The concatenated content can also be stored in memory 104. Generally, the object 305 having the attribute of the dynamic reference stores data indicative of the concatenation position of the dynamic content with the static content in order to ensure that the dynamic and static content are concatenated in the defined order indicated by the object tree data structure 300.

The user is able to control the processor 102, via the input device 106, to store the defined object tree data structure 300 in the data store of the processing system 100 such that the object tree data structure 300 can be retrieved and regenerated at a later time. In particular, the object tree data structure 300 may be stored in a database in a serialised format. However, in alternate embodiments, the object tree data structure 300 may be stored in the data store in a propriety format, in an XML format, or other formats which may be suitable.

Once the object tree data structure 300 has been stored in the data store, the object tree data structure 300 can be retrieved, deserialised, and regenerated. Specifically, the processor retrieves the serialised data from the database and deserialises the serialised data to reconstruct the object tree data structure for generating the document. In one particular form, particular, the user may interact with the user interface, using the input device 106, to select from the data store data representing the object tree data structure 300. Upon selection, the data is retrieved by the processor 102 from memory 104, the objects 305 of the object tree data structure 300 are instantiated by the processor 102 using the retrieved data, the object tree frame 510 presents, via the output device 108 under control of the processor 102, a graphical representation of the object tree data structure 300, and the content viewing frame 510 presents, via the output device 108 under control of the processor 102, a portion of the content for a portion of the object tree data structure 300. It will be appreciated that when the application 500 is relaunched, the processor 102 under control of the application 500 may automatically retrieve an object tree data structure 300 from the data store. In one form, the object tree data structure 300 retrieved by the processor 102 from the database may be the last object tree data structure 300 that was open when the application 500 was closed on the processing system 100.

The user is able to instruct the processor 102 under control of the application 500, via the input device 106 of the processing system 100 and the user interface of the application 500, to generate and export the structured document 340 based upon the object tree data structure 300.

In particular, the processor 102 under control of the application 500 traverses the object tree data structure 300 in an ordinal manner to generate the object content (static and dynamic) for each object which is then combined by the processor 102 in an ordinal manner to generate the document content structured document 340, as illustrated in Figure 3B. In one particular form, the root object 310 may include an array of child objects, wherein the processor begins the traversal at the first child object in the array. In particular, the processor 102 can perform one or more of pre-order traversal, breadth first traversal, and post-order traversal of the object tree data structure 300 in order to generate at least a portion of the document content of the document. In some forms, the pre-order traversal or post-order traversal can be depth first. In one particular form, the root object 310 may include an array of child objects, wherein the processor begins the traversal at the first child object in the array. It will be appreciated that where multiple branches (i.e. sub-trees) occur in the object tree data structure 300, a new processing thread could be created by the processor 102 of the processing system to perform parallel processing on the object tree data structure 300. The processor 102 under control of the application 500 generally identifies the object type of each object when traversing the object tree data structure, identifies the position of the object 305 in the object tree data structure 300, and then generates formatted content according to these object type and position.

When the user instructs the processor 102 via use of the input device 106 interacting with the application to generate the self contained structured document 340, the user may be able to select the format of the structured document. In particular, formats such as PDF, Microsoft Word, XML, HTML, raw text, and the like can be selected by the user from the user interface of the application 500. As will be appreciated, the processor 102 can generate the structured document as an electronic file.

The user can also select a layout style, such as a style sheet 301 (see Figure 3A), which is to be applied when the application generates the structured document 340. In one form, a default layout style may be associated with the object tree data structure 300, however, the user may override the default style layout and select from other available layout styles to be applied for generating the structured document 340. The layout style generally specifies an object type (i.e. root object, child object, grandchild object) and an associated layout style for the respective object type. The application 500 of the style layout 301 by the application can also generate dynamic content. In particular, content associated with objects 305 can be itemised using a numbering format, wherein the format of the numbering is specified by the style layout.

In one variation, the user may associate different layout styles to portions of the object tree data structure 300. In particular, as shown in Figure 3C, an object 305 may have stored an attribute representing style data 380 indicative of the style sheet to apply to the respective object 305.For example, referring back to Figure 3A, the root object 310 includes a first child object 320 and second child object 330. The first child object 320 may be assigned and stored in memory 104 an attribute by the user via the application indicative of a first layout style and the second child object 330 may be assigned an attribute by the user via the application indicative of a second layout style. The children 322, 324, 326 which extend from the first child object 320 have the first style layout applied by the processor 102 when generating output content for the structured document 340, and conversely the children 332, 334 which extend from the second child object 330 have the second style layout applied by the processor 102 when generating output content for the structured document 340.

Generally, the processor 102 under control of the application 500 is configured to generate content for the root object 310, export the generated content to a data structure (such as a file stream) indicative of the incremental exportation of the structured document 340, then traverses to the first child object 320 of the object tree data structure 300. The processor 102 under control of the application 500 then generates the content for the first child object 320, exports the generated content to the data structure of the structure document 340 wherein the exported content is appended to the content already contained in the data structure, and then again traverses to the first child 322 of the current object 320. This process proceeds in a recursive fashion until the processor 102 under control of the application 500 reaches a position of object tree data structure 300 where the current object 322 has no children. The application then traverses back up the object tree data structure 300 to a parent object 320 which has a child object 324 whose content has not been generated and exported by the processor 102 to data structure forming the structured document. The processor 102 under control of the application then traverses to this next object, and the process repeats throughout the entire object tree data structure 300. Once the final child object 334 of the object tree data structure 300 is reached, the data structure is closed by the processor 102, thereby forming the exported structured document 340.

Upon exporting the finalised structured document 340, the processor 102 under control of the application 500 may launch a program associated with the format of the finalised document. For example, if the finalised document is provided in the form of a PDF, the processor 102 under control of the application 500 may automatically launch Adobe Acrobat, or similar, in order for the user to review the exported document 340 that has been generated using the object tree data structure 300.

In one alternative, the program associated with the output format of the structured document 340 may be launched by the processor 102 prior to generating the structured document 340, wherein the processor 102 under control of the application 500 which defines the object tree data structure 300 instructs the program to automatically generate the structured document 340 based upon the defined object tree data structure 300.

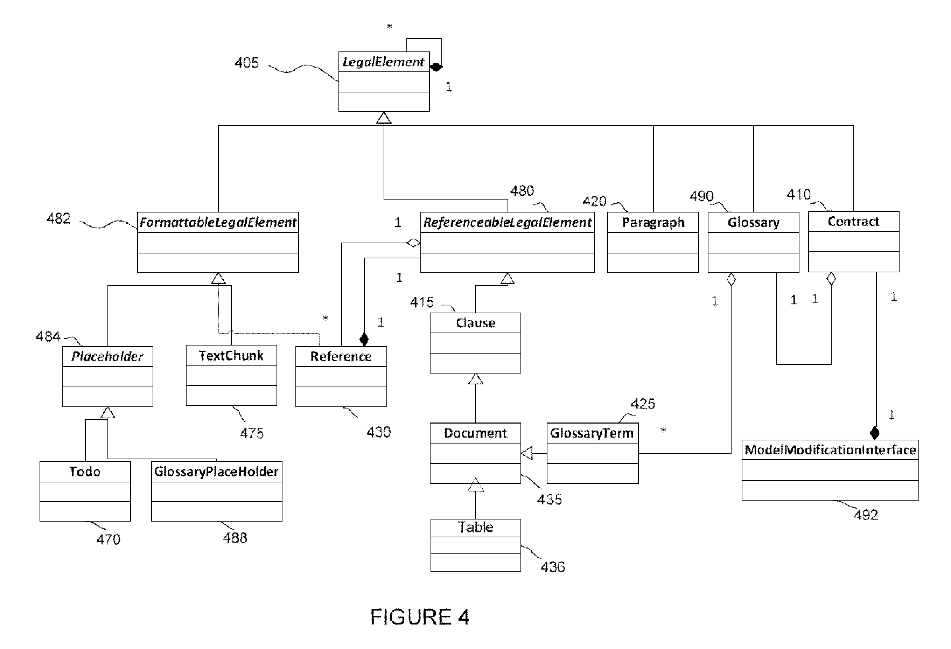

The application 500 will now be described in relation to the development, management and generation of legal documents, specifically legal contracts, although it will be appreciated that the application can be used for the generation of other types of documents containing content. The development, management and generation of contract documents will also be described with reference to the UML diagram of Figure 4.

The user is able to launch the application 500 and either generate a new contract or retrieve an existing contract.

In the event that the user selects, via input provided by the input device 106, a new contract to be created, a root object 310 in the form of a contract object 410 is generated and stored in a serialised format in the database. When a contract object 410 is created, a contract property dialog is displayed by the processor 102 via the output device 108 requesting that contract property data is input by the user via the input device 106, such as the keyboard of the processing system 100. Specifically, contract property data such as the contracting parties, can be input by the user using the input device 106, wherein the application 500 stores the contract property data of the contract object 410 in a serialised format in the database. Upon generation of the contract property data, the processor 102 under control of the application 500 updates the graphical representation of the object tree frame 510.

The user can then create one or more document objects 435, via selection using the input device 106 from a menu in the application 500, wherein each document object 435 is a child of the contract object 410. When a new document object 435 is created by the user via interaction with the user interface of the application 500 controlling the processor 102, a dialog window in shown via the output device 108 requesting the user to input document property data, wherein the application 500 updates the object tree data structure 300 in the database with the newly created document object 435 and associated document property data.

Upon generation of the document object 435, the processor 102 under control of the application displays via the output device 108 content data associated with the document object 435 within the content viewing frame 520. In the event that the document is newly created, little or no content may be displayed within the content viewing frame 520.

The user can then select from a menu of the application 500 controlling the processor 102 to create one or more clause objects 415 which link to the document object 435 or the contract object 410. Generally, upon the user defining a clause object 415, the user may define that the clause is dependent upon another clause or object in the contract 410, wherein the dependency is stored by the processor 102 in memory 104. Thus, the user can interact with the user interface to define a dynamic reference to one of the objects 305 in the object tree data structure 300 of the contract 310. The processor 102 under control by application 500, in response to the selection, stores in memory 104 a pointer as an attribute for the current object 305 to the dynamically referenced object. More specifically, the dynamic reference may execute a function 375 of the dynamically referenced object to retrieve dynamic content upon either presentation in the content viewing frame or generation of the exported contract 340. For example, as shown in Figure 3C, the dynamic reference 350 calls a function, getDynamicContent(params), of the dynamically referenced object. Parameters may be passed to the dynamically referenced object. Thus, if the position of the referenced object in the object tree data structure 300 alters during the development of the contract, the dynamic reference ensures that the correct content is generated such that the relationship between the clauses is maintained without manual intervention.

In one particular form, the processor 102 receives input data from the input device 106 indicative of the user deleting one of the objects from the object tree data structure 300. The processor is configured to detect if the deleted object is referenced by a dynamic reference of one of the objects remaining in the object tree data structure 300, wherein the processor 102 controls the output device 108 to present, via the interface, a detection message in response to the detection and requests correction to the respective dynamic reference. The user can provide via the input device to the processor new dynamic reference data from the input device indicative of a dynamic reference to one of the remaining objects in the object tree data structure, wherein the processor modifies the respective dynamic reference of the one or more objects which referenced the deleted object with the new dynamic reference data.

More specifically, in the event that referenced object of a dynamic reference is deleted, the system will ensure that the alteration is to be viewed at a later time by creating an alteration reminder object 470, referred to in Figure 4 as a 'Todo' object, created in the place of the dynamic reference. The user can then run, at a later time, a query executed via the processor 102 under control of the application to draw the users attention to the alteration reminder objects, wherein each alternation reminder object 470 is displayed by the processor 102 via the output device 108 as a result of the executed query.

For example, in the event that a dynamic reference is generated which specifies that clause 6 is dependent upon clause 5, the dynamic reference can be stored in the form of a pointer to the clause object for clause 5. In the event that the object tree data structure 300 is rearranged such that clause 5 is now clause 4, clause 6 will automatically generate dynamic content, under control of the processor 102, specifying that clause 6 is dependent upon clause 4 due to the pointer reference rather than the use of static content.

It will be appreciated that a number of sub-clause objects 415 can also be created which extends from a clause object 415 in the object tree data structure 300. The user is also able to create paragraph objects 420, text objects 475 (referred to in Figure 4 as a "TextChunk" object 475) and reference objects 430 which are linked to referenceable objects such as clause objects 415, document objects 435 and glossary term objects 425 of the object tree data structure 300. As shown in Figure 4, a table object 436 which inherits from a document object 435 can also be defined in the object data tree structure 300, wherein the processor 102 generates a table based on the attributes of the table object 436.

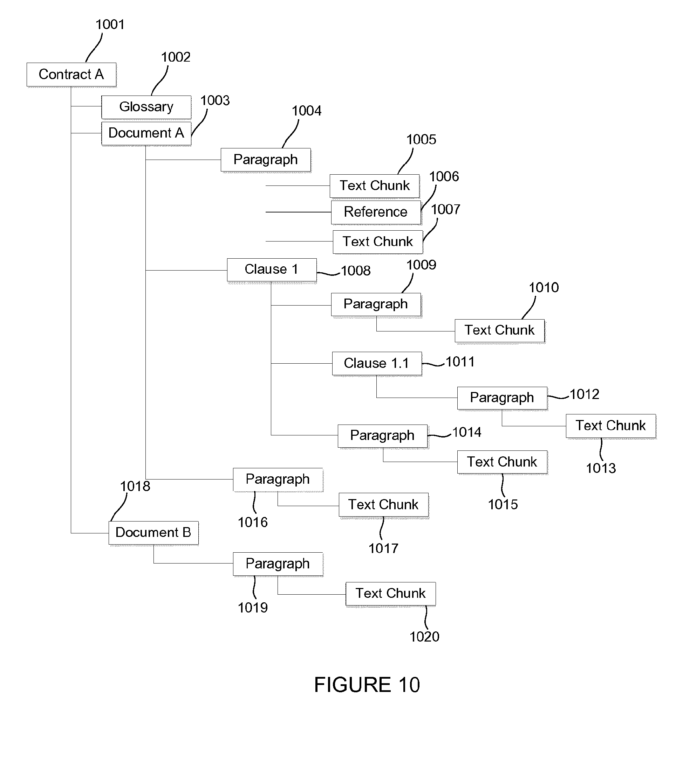

Referring to Figure 10 there is shown a graphical representation of an example object tree data structure 300 for a legal contract. In particular, the root object is a contract object 1001 which includes two documents 1003, 1008 and a glossary 1002. The first document 1003 includes two paragraph objects 1004, 1016 including children objects which are linked thereto, and a clause object 1008 which also includes various children sub-objects. The second document includes a paragraph object 1019 including a child object of a text chunk object 1020. When the legal contract is generated by the processor 102, the processor 102 traverses the object tree data structure 300. In this instance, the processor 102 would concatenate the object content generated in an ascending order of the reference numerals shown in Figure 10.

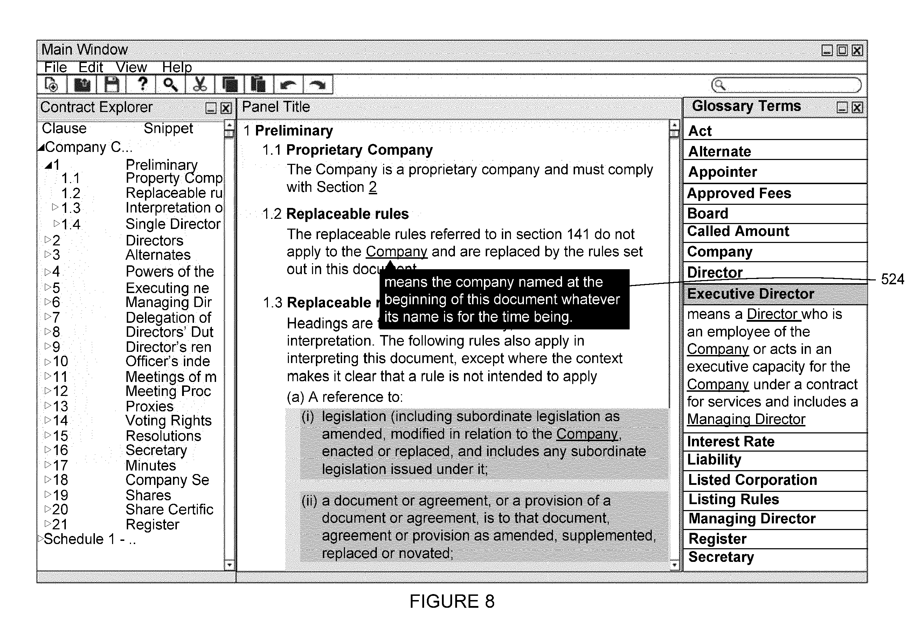

Referring to Figures 5 to 12, the application 500 also includes a glossary frame 530. The processor 102 presents the glossary frame 530 via the output device 108, wherein the glossary frame presents glossary data. The glossary data is stored by the processor 102 in memory 104 as attribute data of the contract object 410. Alternatively, the object tree data structure 300 can include a glossary object 490 including a number of glossary items 425. The glossary data is an aggregated list of glossary elements 532. Each glossary element 532 includes a glossary term 534 and a glossary definition 536. The user can insert a reference to a glossary element 532 in content of the object 305, wherein a dialog window is displayed by the processor 102 via the output device 108 to the user via the interface of the application enabling the user to select, via the input device 106, a glossary element 532. In response to the selection, a pointer to the glossary element is stored by the processor 102 in memory 104 as part of the respective object 305. When the content of the respective object 305 is generated and presented within the content viewing frame 520, the glossary term 534 of the glossary element 532 referenced by the pointer is presented in the content viewing frame 520. Additionally, the user is able to interact using the input device 106 with the glossary term 532 presented in the content viewing frame 520 using the cursor, such as hovering the cursor over the glossary term 532, wherein the glossary definition is retrieved from memory 104 by the processor 102 using the object tree data structure and presented in a graphical bubble 524 of the interface via the output device 108 as shown in Figure 8.

For example, as shown in the examples, the glossary window may include a definition of the glossary term 'Act' with the corresponding glossary definition being *'Patents Act 1990 (Cth)'.* The user can create a glossary reference in the content of a clause object to the glossary term 'Act'. A pointer to the glossary element is stored in memory 104 in the respective object. When the user selects the respective clause object from the object tree frame such that the content for the object, and sub-objects, is/are retrieved, generated and presented within the content viewing frame by the processor 102 using the output device 108, wherein the term glossary term 'Act' is retrieved by the processor 102 from memory 104 by use of the stored pointer to the glossary element. Furthermore, the glossary term is presented by the processing via the output device 108 in a marked-up format in the content viewing frame, such as by way of a different coloured font similar to a hyperlink for HTML documents. The user can then interact using the input device 106 with the referenced glossary term from the content viewing frame, such as by way of hovering a cursor associated with the mouse over the glossary term, wherein the glossary definition of the glossary term is retrieved from the glossary element of the glossary data of the contract object stored within memory 104 by the processor 102, and displayed in the content viewing frame by the processor 102 via the output device 108. Using this functionality, the user is able to avoid having to scroll between different portions of the document in order to determine the meaning of a particular term.

It will also be appreciated that the generation of the finalised document 340 can include the processor 102 generating a glossary section. In particular, the glossary data associated with a contract can be collated and appended to the finalised structured document 340.

As shown in Figures 5 to 12, the application 500 provides a function, via selection of a button of the interface, to remove glossary elements 532 from the glossary data which are not referenced within the object tree data structure 300. When the user selects this function via the input device 106, the processor 102 under control of the application 500 queries the objects in the object tree data structure 300 for each glossary element 532 to determine if it has been referenced. Non referenced elements 532 which do not appear in the list of referenced glossary elements 532 are removed from the glossary data stored in memory 104. By providing this function, generic glossary data can be selected from a plurality of generic glossaries for particular legal areas (i.e. patent law, trade mark law, competition law, etc) and associated in memory 104 by the processor 102 with the contract object 410, and then when the structured document 340 is to be exported, the user can select this function from the user interface of the application 500, wherein the application 500 reduces the glossary data such that redundant glossary elements are removed from memory 104 prior to exporting the structured document.

As shown in Figures 5 to 12, the user can edit the glossary data within the glossary frame 530. Specifically, new glossary elements 532 can be introduced, and particular glossary elements 532 can be removed or edited from the glossary data stored in memory 104 by the processor 102.

The application 500 provides a functionality to extend a precedent object when defining an object 305 in the object tree data structure 300. In particular, when the user interacts with the application 500 via the input device 106 to create a new object 305 for the object tree data structure 300, the user can select via the input device 106 a precedent object from a library of precedent objects. In response to the selection, the precedent object is instantiated by the processor 102 and stored in memory 104 to extend the precedent object, wherein the same attributes are initially identical to the precedent object. The user can then edit the attributes of the extended object for customisation, wherein the modifications are stored as an attribute of the extended object in memory 104 by the processor 102. In the event that the precedent object is altered, the alterations to the precedent object may be inherited by objects which extend the precedent object. In particular, upon the processor 102 under control of the application 500 detecting an alteration to the precedent object, the user is prompted with an indication of the extended objects which are to inherit the alteration, wherein the user can accept, deny, customise the alteration, or view at another time.

The application 500 also configures the processing system to provide version control functionality on a per object basis. Where the content of an object 305 is edited, a time-stamped copy of that content is stored in a version data structure associated with the object 305 which is stored by the processor 102 in memory 104, thereby providing an opportunity for the user to revert the object to a previous versions of the respective object 305 without affecting other objects in the object tree data structure 300. This copy may be either an exact copy, or a copy which is based on only the change-set necessary for the processor 102 to revert back to the previous version (which provides a more compressed way of storing the information). This allows the user to perform content comparisons based on point-in-time versions of pieces of content within the object tree data structure 300, without having to do a global comparison. In one embodiment, as shown in Figure 3C, each object 305 may include, as an attribute, version data 370.

The application 500 also enables a user to take a "snapshot" copy of the contract 310. Each snapshot is assigned an iterative version number based on the number of snapshots taken in the past, wherein each snapshot is captured by the processor 102 and stored in memory 104. This enables a user to provide a copy of, for example, version 1.0 of the contract. While the snapshot provides a point in time version, the current version may include additional content not captured in the snapshot and is assigned an iterative version number based on a numbering scheme. For example, the numbering scheme may include a (snapshot #).(# of documents changed since contract snapshot).(# of clauses changed since contract snapshot).

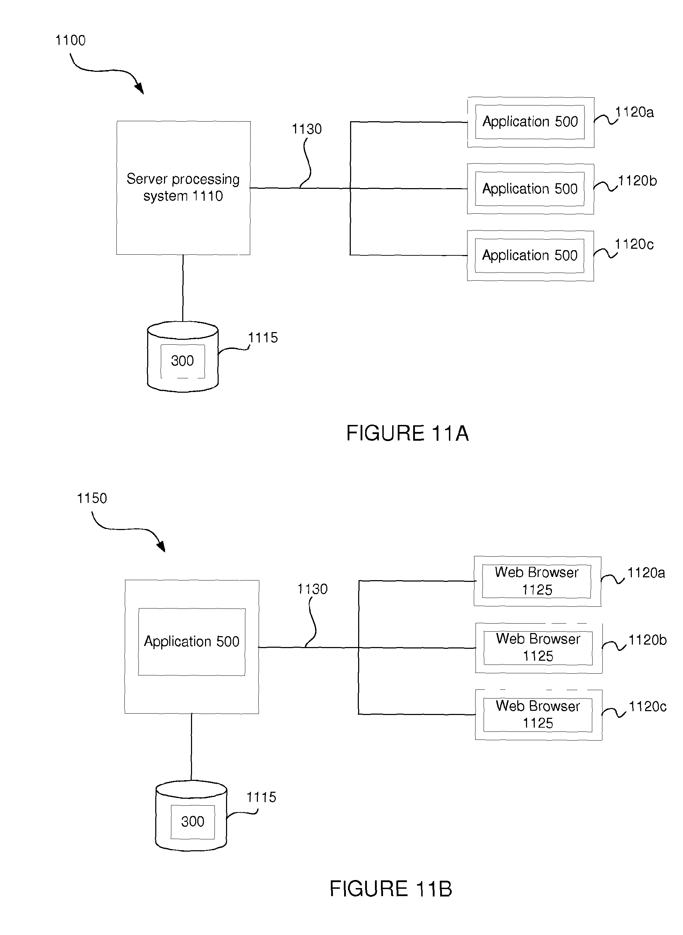

In one embodiment, as shown in Figure 11A, the processing system 100 may be provided in the form of a distributed processing system 1100. In particular, the database 1115 may be located at a server processing system acting 1110 acting as a data storage server and one or more client processing systems 1120a, 1120b, 1120c (generically referred to as 1120) may be in data communication with the data storage server 1110 via a data communication medium 1130, such as the Internet, although other networks are also possible as previously described in relation to Figure 2. The application 500 can be executed on each client processing system 1120, wherein the data is retrieved and stored remotely at the database 1115 of the data storage server by the processor of the server processing system 1110. In this configuration, the client processing system may retrieve the object tree data structure 300 from the database 1115 via a series of database query statements, or the like, wherein the client processing system 1120 builds the document based upon receiving the data from the server processing system 1110. Therefore, the document can be generated at the client processing system 1120.

In an alternate form, as shown in Figure 11B, the application 500 is a server side application which is executed by the processor of the server processing system 1110, wherein the client processing system 1120 presents an online interface via a web browser application 1125 or the like. The application 500 executes on the server processing system 1110 and receives commands via the network 1130 in response to user interaction using the input device of the client processing system 1120 with the online interface presented via the web-browser 1125. Data can still be stored remotely in the database 1115 hosted by the server processing system 1110. In this configuration, in the event that the client processing system transfers a command for the document 340 can be generated, the server processing system receives the command, then builds the document 340 based on the data stored in the database 1115 representing the object tree data structure and then transfers the document 340 to the respective client processing system 1120 via the network 1130.

This distributed nature of the processing environment illustrated in Figures 11A and 11B allow for multiple users to be accessing, reviewing, collaborating, and modifying objects of a particular project.

Referring to Figure 4, the user can define a placeholder object 482 in the object tree data structure. The placeholder object defines a location in the object tree data structure 300 which an object is to be place when generating the document. A reminder object 470 can inherit the functionality of the placeholder object 484. Additionally, a glossary place holder object 488 can be defined in the object tree data structure 300 to indicate a location which the glossary is to be inserted into the document once generated.

Still referring to Figure 4, it can be seen that the objects of the object tree data structure can be created using an object orientated paradigm. Referenceable objects such as clause objects 415, glossary term objects 425 and document objects 435 can inherit functionality and information from a parent object such as a referenceable legal element object 480. Furthermore, objects which are formatted by the processor when generating the structured document, such as text objects 475, reference objects 430, and place holder objects 484 can inherit functionality and data from a parent object such as a formattable legal element object 482 as shown in Figure 4.

In one embodiment, comment data may be stored in and associated with the object tree data structure 300 within memory 104 by the processor 102 indicative of notes and comments by the author. The comment data can be displayed, by the processor 102 using the output device 108, within the interface. However, the processor 102 disregards the comment data when generating structured document as the comment data does not form part of the document comment. For example, in the context of generating a legal document, the comment data may be indicative of an email or instructions received from a client requesting modification of a particular clause of the contract associated with an object of the object tree data structure. Other types of objects can also be embedded with one or more of the objects 305 of the object tree data structure 300. For example, an audio object, such as a dictation, or an video object can be embedded within one or more of the objects of the object tree data structure 300.

Generally, metadata is stored in memory in association with the object in the object tree data structure 300. The processor 102 can conduct a search, based on a search criteria input via the input device 106, of the metadata stored in memory for objects stored in the object tree data structure 300 and return, via the output device 108, search results indicative of objects in the object tree data structure 300 which satisfy the search criteria. Due to the tokenized nature of the objects 305 within the object tree data structure 300, the granularity of the search can be performed on a per object basis rather than simply on a per document basis.

In another embodiment, as shown in Figure 4, certain objects in the object tree data structure 492 such as a contract object 410 can include an object referred to as a model modification interface. When modifications are made to the content via the interface via the input device, the model modification interface of the contract object is called by the processor 102 such that content of the object tree data structure 300 is modified and stored in memory 104. Once modified, the interface is updated to reflect the current state of the object tree data structure 492.

In another embodiment, the application 500 can utilise auto-completion functionality when the user is defining or editing content of an object via the input device 106 of the processing system 100. In particular, when the user begins to enter a particular term into the content viewing frame 520, the processor compares the partially input term against glossary terms stored in the glossary. Any partially matching glossary terms are presented via the output device 108 of the processing system 100, wherein the user can select one of the presented partially matching glossary terms in order to complete the input. In this instance, a reference to the glossary term is inserted for the respective object by the processor 102 and stored in memory 104. In another form, the auto-complete functionality may also be provided for clause numbers. For example, the user may input via the input device a specific set of keystrokes such as "ctrl+r" wherein the processor presents via the interface a list of clause numbers, wherein the user can select one of the clause numbers to insert a dynamic reference to the respective clause.

The above embodiments may take the form of an entirely hardware embodiment, an entirely software embodiment, firmware, or an embodiment combining software and hardware aspects.

Many modifications will be apparent to those skilled in the art without departing from the scope of the present invention.

## Claims

1. A processing system (100) for generating a document (340), wherein the processing system (100) includes:
a memory (104); and
a processor (102) in communication with the memory (104);
wherein:
the processor (102) obtains, from the memory (104), an object tree data structure (300) including a plurality of objects (305), wherein the object tree data structure (300) is indicative of an order which content generated by objects (305) are to be ordered to generate document content (345), wherein one or more objects (305) include static content (355) and one or more objects include a dynamic reference (350);
the processor (102) generates dynamic content for each object (355) in the object tree data structure (300) having a dynamic reference (350); and
the processor (102) generates the document content (345) by combining the dynamic content and the static content (355) of the plurality of objects (305) according to the order indicated by the object tree data structure (300) in order to generate the document (340).

2. The processing system (100) according to claim 1, wherein the object tree data structure (300) includes a first object having a dynamic reference (350) which includes a pointer to a second object of the object tree data structure (300), wherein the processor (102) generates dynamic content for the first object based upon the second object referenced by the pointer.

3. The processing system (100) according to claim 2, wherein the processor (102) generates the dynamic content for the first object based upon the order which the second object is defined in the object tree data structure (300).

4. The processing system (100) according to any one of claims 1 to 3, wherein the document (340) generated by the processor (102) is an electronic file.

5. The processing system (100) according to any one of claims 1 to 4, wherein the memory (104) includes a database (116) having stored therein serialised data indicative of the object tree data structure (300), wherein the processor (102) retrieves the serialised data from the database (116) and deserialises the serialised data to reconstruct the object tree data structure (300) for generating the document (340).

6. The processing system (100) according to any one of claims 1 to 5, wherein the processing system (100) includes:
an input device (106) in communication with the processor (102); and
an output device (108) in communication with the processor (102);
wherein the memory (104) includes executable instructions which, when executed by the processor (102), cause an interface to be presented via the output device (108) presenting a visual representation of the object tree data structure (300) and to enable a user to define or modify the object tree data structure (300) via the input device (106).

7. The processing system (100) according to claim 6, wherein the interface includes a first panel (510) including the visual representation of the object tree data structure (300), and a second panel (520) for presenting content generated for one of the objects selected from the visual representation of the object tree data structure (300), wherein upon user selection, via the input device (106), of one of the objects (305) presented within the first panel (510), the processor (102) determines content for the selected object (305) and controls the output device (108) to present the content for the selected object in the second panel (520).

8. The processing system (100) according to claim 6 or 7, wherein at least one object (305) has stored in memory (104) version data (370) indicative of one or more previous versions of the respective object (305), wherein, based on user input via the input device (106), the processor (102) modifies the object (305) to revert to one of the previous versions of the respective object (305) such that the document (340) is generated using the respective previous version of the respective object (305).

9. The processing system (100) according to any one of claims 6 to 8, wherein the processor (102) receives input data from the input device (106) indicative of the user deleting one of the objects (305) from the object tree data structure (300), wherein the processor (102) detects if the deleted object (305) is referenced by a dynamic reference (350) of one of the objects (305) remaining in the object tree data structure (300), wherein the processor (102) controls the output device (108) to present, via the interface, a detection message in response to the detection and requests correction to the respective dynamic reference (350).

10. The processing system (100) according to claim 9, wherein the processor (102) receives new dynamic reference data from the input device (106), operated by the user, indicative of a dynamic reference (350) to one of the remaining objects in the object tree data structure (300), wherein the processor (102) modifies the respective dynamic reference (350) of the one or more objects (305) which referenced the deleted object (305) with the new dynamic reference data.

11. The processing system (100) according to any one of claims 1 to 10, wherein the object tree data structure (300) includes glossary data (490) including a plurality of referenceable glossary elements (425), wherein one or more objects (305) in the object tree data structure (300) reference one or more of the glossary elements (425), wherein the processor (102) generates the document (340) to include a glossary section based on the glossary data (490).

12. The processing system (100) according to claim 11, wherein prior to generating the document (340), the processor (102) determines if one or more non-referenced glossary elements (425) are present in the glossary data (490), wherein in response to detection of the one or more non-referenced glossary elements (425), the processor (102) deletes from the glossary data (490) at least some of the one or more non-referenced glossary elements (425) prior to generating the document (490).

13. The processing system (100) according to any one of claims 1 to 12, wherein the processor (102) formats the document content (345) according to a style sheet (301), stored in the memory, to generate the document.

14. The processing system (100) according to any one of claims 1 to 13, wherein the processing system is a distributed processing system (1100) including:
a server processing system (1110); and
a client processing system (1120) in communication with the server processing system (1110) via a network (1130);
wherein the memory (104) storing the object tree data structure (300) is in data communication with the server processing system (1110).

15. A method of generating a document (340), the method being performed by a processing system (100) having a memory (104) and processor (102) in communication therewith, wherein the method includes:
the processor (102) obtaining, from the memory (104), an object tree data structure (300) including a plurality of objects (305), wherein the object tree data structure (300) is indicative of an order which content generated by objects (305) are to be ordered to generate document content (345), wherein one or more objects (340) include static content (355) and one or more objects include a dynamic reference (355);
the processor (102) generating dynamic content for each object in the object tree data structure (300) having a dynamic reference; and
the processor (102) generating the document content (345) by combining the dynamic content and the static content (355) of the plurality of objects (305) according to the order indicated by the object tree data structure (300) in order to generate the document (340).
